# EUROPEAN PATENT SPECIFICATION

(11) **EP 3 405 826 B1**
(45) Date of publication and mention of the grant of the patent: **20.04.2022**
(21) Application number: 16701336.6
(22) Date of filing: 22.01.2016
(51) Int. Cl.: G02B 6/42, G02B 6/44

(54) **TERMINATION MODULE AND TERMINATION ASSEMBLY WITH SAID TERMINATION MODULE**
ABSCHLUSSMODUL UND ABSCHLUSSANORDNUNG MIT DIESEM ABSCHLUSSMODUL
MODULE DE TERMINAISON ET ENSEMBLE DE TERMINAISON COMPRENANT LEDIT MODULE DE TERMINAISON

(43) Date of publication of application: 28.11.2018
(73) Proprietor: Prysmian S.p.A., 20126 Milan (IT)
(72) Inventor: ABBIATI, Fabio, 20126 Milano (IT); CANDELA, Roberto, 20126 Milano (IT)
(74) Representative: Perani & Partners S.p.A.
(86) International application number: PCT/EP2016/051331
(87) International publication number: WO 2017/125167

(56) References cited:
- WO-A1-2013/063045
- WO-A1-2013/063045
- US-A1- 2008 131 132
- US-A1- 2008 131 132
- US-A1- 2015 309 271
- US-A1- 2015 309 271

## Description

### Field of the invention

The present invention relates to the field of termination of power optical cables comprising electrical cables for power transmission and optical fibers for data transmission. In particular, the present invention relates to a termination module for a power optical cable and a termination assembly with said termination module.

### Background of the invention

For the purposes of the present description and claims, with "power optical cable" it is intended a cable comprising one or more electrical cables and at least one optical fiber. Each electrical cable comprises an electrical conductor formed by a plurality of electrically conductive filaments and an insulation jacket surrounding the electrical conductor. At least one of the electrical cables comprises one or more optical fibers dispersed among the electrically conductive filaments of the electrical conductor.

An optical fiber typically comprises an optical waveguide, constituted by an optically transmissive core, surrounded by a cladding. The optical waveguide is preferably covered by at least one protective coating layer ("coating"). Typically two protective coating layers are present: the first coating layer ("primary coating") is in direct contact with the optical waveguide, while the second coating layer ("secondary coating") covers the primary coating.

In addition, when a buffer layer covers an optical fiber, the optical fiber is called "buffered optical fiber". The buffer layer may be substantially in contact with the coating ("tight buffer") or it may consist of a small tube of inner diameter somehow larger than the outer diameter of the coating ("loose buffer").

WO 2009/050533 discloses a power optical cable with electrical conductors formed by copper filaments and a buffered optical fiber dispersed among the filaments of one or more of the electrical conductors. This power optical cable can be used in existing buildings to replace the power cables already installed or in new buildings for the transmission of power and data.

DE 3116869 discloses a cabinet for receiving racks where both optical and electrical signals can be managed through optical plugs and power plugs respectively. In this cabinet, power cables are separated from optical cables and enter the racks at respective power and optical plugs.

### Summary of the invention

When a power optical cable is conveyed to a user location, the relevant electrical conductors and optical fibers must be connected to corresponding user's electrical conductors and optical fibers, for supplying user's apparatus with electric power and optical signals.

Typically, user's electrical conductors and optical fibers are arranged in independent power and optical cables and the connection of the power optical cable with the user's power and optical cables is made in a cabinet.

The Applicant has observed that, in case a power optical cable such as the one disclosed in WO 2009/050533 is used with a cabinet, the connection of the electrical conductors and the optical fibers of the power optical cable with the power plugs and the optical plugs of the cabinet would be exposed to possible damages. Moreover, managing electrical conductors and optical fibers together may be dangerous when the cabinet is accessed by operators.

In view of the above, the Applicant has tackled the problem of managing the optical fibers of optical cables and the electric conductors of power cables within a termination module in a safe way for operators.

The Applicant has found a termination module for a power optical cable in which the electric conductors and the optical fibers of the power optical cable are arranged inside the termination module so as to make available separated electric and optical connections for connecting the optical fibers and the electric conductors of the power optical cable with customer optical fibers and customer power cables.

The present invention, therefore, relates to a termination module comprising a first enclosure part with an inlet opening for receiving a power optical cable and an electrical connector enabling electrically connecting the electrical conductors of the power optical cable with corresponding electrical conductors of a customer power cable. The termination module also comprises a second enclosure part with one or more optical connectors optically connecting a buffered optical fibers of the power optical cable with one or more corresponding customer optical fibers of a customer optical cable.

The first enclosure part is a fixed part comprising the inlet opening and an electric outlet opening for receiving said customer power cable, and the second enclosure part is a movable part rotatably attached to the fixed part to move relative to the fixed part about a rotation axis and comprising one or more optical outlet openings.

Preferably, the inlet opening, the electric outlet opening and the one or more optical outlet openings are formed in a bottom surface of the termination module.

Preferably, the termination module comprises one or more optical housings arranged at the one or more optical outlet openings and configured to receive corresponding the one or more optical connectors coupled to the buffered optical fibers of the power optical cable and the electric connector arranged proximate to said electric outlet opening, wherein the electric connector and the one or more optical housings are arranged inside the enclosure. Preferably, the termination module comprises a routing member arranged inside the it and configured to route the buffered optical fibers of the power optical cable to the corresponding one or more optical housings .

The inlet opening and the electric outlet opening are formed in a bottom wall of the fixed part and the one or more optical outlet openings are formed in a bottom wall of the movable part.

The electric connector is arranged inside the fixed part and the one or more optical housings are arranged inside the movable part.

Preferably, the routing member is arranged inside the movable part.

Preferably, the inlet opening has an inlet axis extending along an axial direction, the termination module comprising a cable retaining member arranged inside the termination module proximate to the inlet opening and configured to receive and retain the power optical cable to constrain the power optical cable along the axial direction.

Preferably, the cable retaining member is configured to retain the one or more buffered optical fibers of the power optical cable.

According to another aspect, the present invention relates to a termination assembly comprising
- a power optical cable comprising one or more electrical conductors and one or more buffered optical fibers,
- a termination module housing an end portion of the power optical cable,
wherein the termination module comprises a first enclosure part with an inlet opening for receiving said power optical cable, and an electrical connector enabling electrically connecting the electrical conductors of the power optical cable with corresponding electrical conductors of the customer power cable,
- a second enclosure part comprising one or more optical connectors optically connecting the buffered optical fibers with one or more corresponding customer optical fibers of the customer optical cable.

### Brief description of the drawings

The present invention will now be described in more detail hereinafter with reference to the accompanying drawings, in which some embodiments of the invention are shown.
FIG. 1 is a perspective view of an embodiment of a termination assembly according to the invention,
FIG. 2 is a perspective view of an electric cabinet with termination assemblies of FIG. 1,

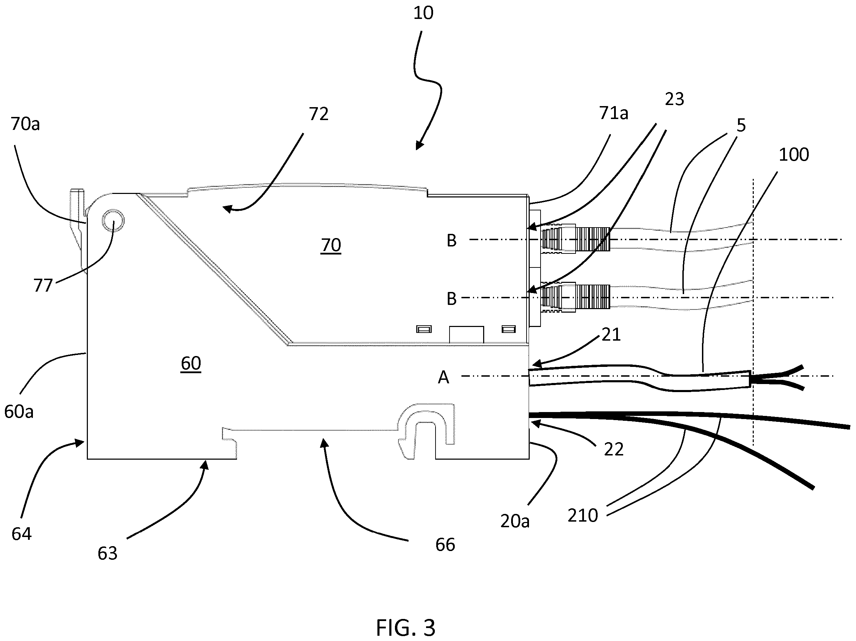

FIG. 3 is a side view of the optical termination assembly of FIG. 1, in a first position,

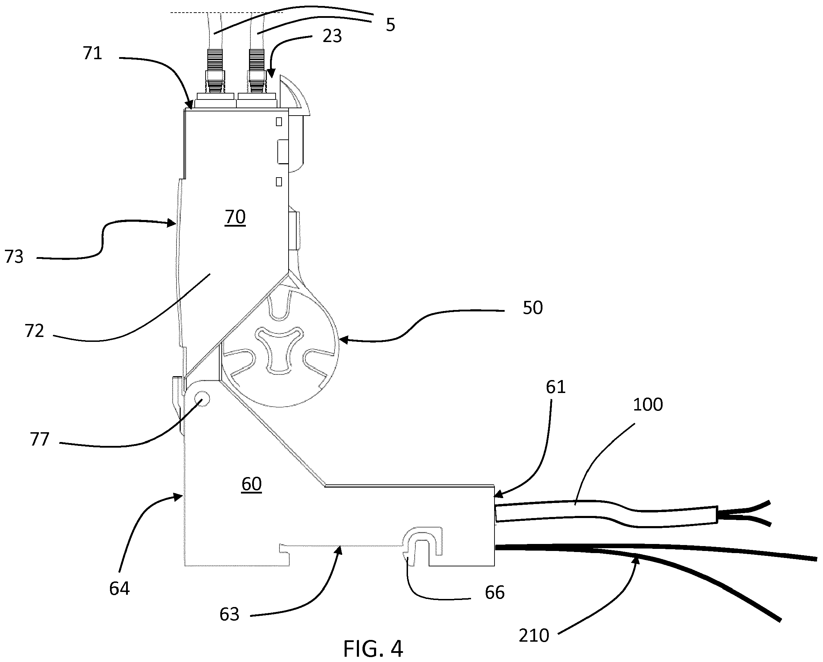

FIG. 4 is a side view of the optical termination assembly of FIG. 1, in a second position,
FIG. 5 is a perspective view of the optical termination assembly of FIG. 1,
FIG. 6 is a sectional view of the power optical cable of the termination assembly of FIG. 1,
FIGS. 7a to 7e are schematic representations of the steps of the preparation of the end of power optical cable;
FIG. 8 is a view of the connections between the electric conductors of a power optical cable prepared according to the steps of FIGS 7a to 7e with a customer power cable.

### Detailed description

For the purposes of the present description and claims, relative terms such as "horizontal," "vertical," "up," "down," "top" and "bottom" as well as derivatives thereof (e.g., "horizontally," "downwardly," "upwardly," etc.) should be construed to refer to the orientation as then described or as shown in the drawing figure under discussion. These relative terms are for convenience of description and normally are not intended to require a particular orientation.

For the purposes of the present description and claims, a power optical cable comprises one or more electrical cables and at least one optical fiber.

When a single phase cable is referred to, it is meant an assembly formed by one cable comprising a multi-filament electrical conductor and an insulation jacket. In use, the cable is connected to a phase of the power network to convey single phase electric power ("phase cable"). A single phase cable arrangement may comprise also second cable, to be connected to the neutral pole of the power network (generally referred to as "neutral cable") and, optionally, a further cable to be connected to the ground (generally referred to as "ground cable"), all assembled together (usually stranded).

Each of such phase cable, neutral cable and ground cable generally have the same structure, comprising a multi-filament electrical conductor and an insulation jacket.

When a three phase cable is referred to, it is meant an assembly formed by three cables, having a construction as described above, assembled together (usually stranded) to be connected to the respective phases of the power network, to convey three phase electric power. In such case, each cable of the three-phase cable is usually referred to as phase cable. Preferably, a three phase cable may comprise also a neutral cable and a ground cable.

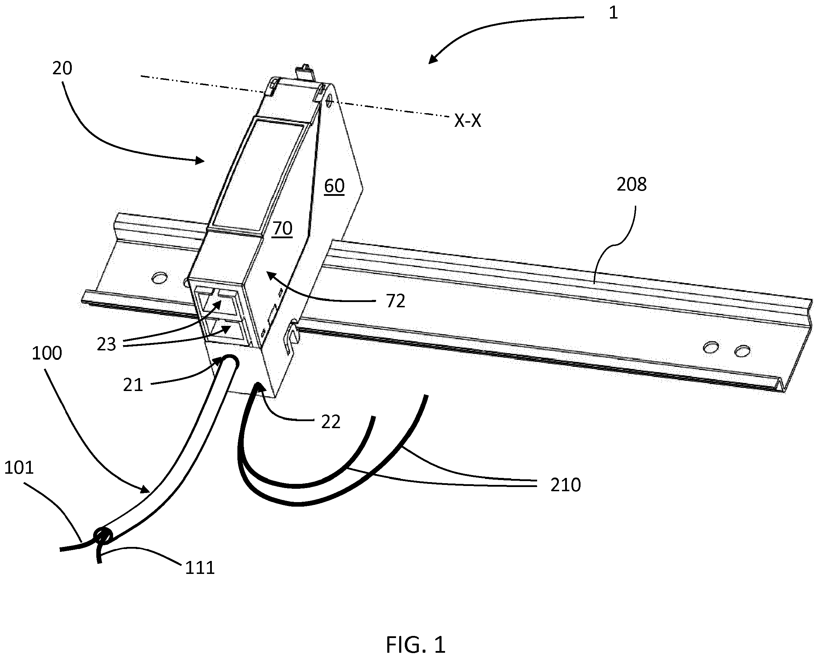

Figure 1 shows a termination assembly 1 comprising a termination module 10 and a power optical cable 100.

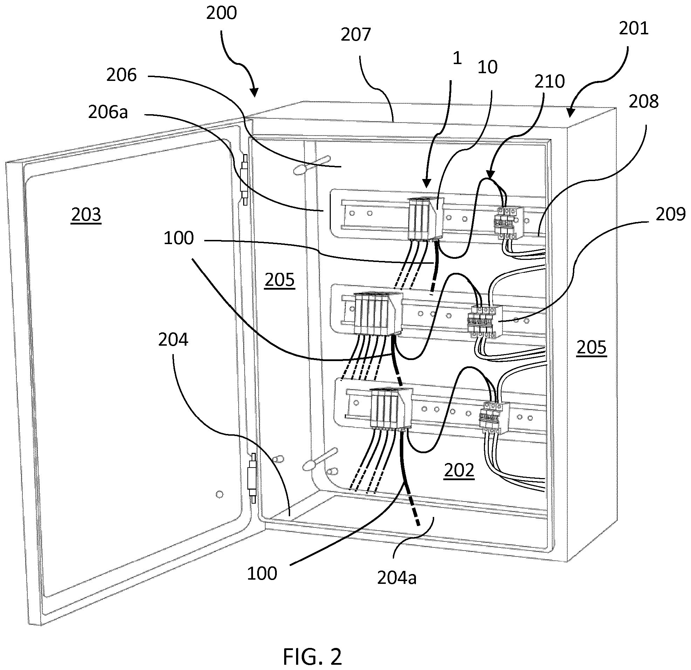

The termination assembly 1 may be arranged in an electric cabinet, such as the electric cabinet 200 shown in Figure 2. Alternatively, the termination assembly 1 may be arranged and attached to a mounting member fixed to a wall of a room or directly to a wall of a room as desired by the customer.

Figure 2 shows an electric cabinet 200 with a plurality of termination assemblies 1 arranged therein.

The electric cabinet 200 comprises an enclosure 201 having a front access opening 202 and a door 203 connected to the enclosure 201 for opening and closing the front access opening 202.

The enclosure 201 may be mounted on a wall or lay on a floor and comprises a bottom wall 204, intended to be arranged substantially parallel to the floor, two lateral walls 205, a rear wall 206 and a top wall 207. The bottom wall 204 or the rear wall 206 has a bottom access opening 204a for passage of cables.

The rear wall 206 has an inner surface 206a facing inside the enclosure 201. A plurality of mounting members 208 are fixed to the inner surface 206a of the rear wall 106. Preferably, the mounting members 208 are metal rails, more preferably DIN rails.

The electric cabinet 200 comprises one or more electric equipment 209 attached to the mounting members 208 and one or more termination assemblies 1. The electric equipment 209 may include electric switches and/or electric circuit breakers.

The power optical cable 100 is a low voltage cable which is suitable for power distribution and data transmission within a building. Within the present invention, by "low voltage" cable it is meant a cable designed to operate at a voltage less than about 1 kV.

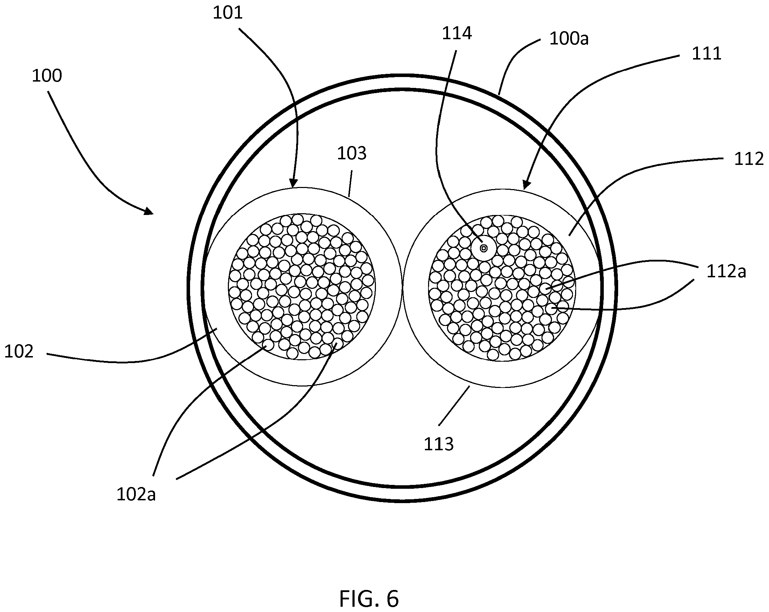

Referring to the example shown in figure 6, the power optical cable 100 comprises at least one electrical cable, in the example two electrical cables, namely one phase cable 101 and one neutral cable 111 protected by a common external jacket 100a. Each electrical cable comprises an electrical conductor formed by a plurality of electrically conductive filaments, in the example copper, and an insulation jacket surrounding the electrical conductor.

The phase cable 101 and the neutral cable 111 comprise a respective conductor 102, 112, each formed by electrically conductive filaments 102a, 112a, and a respective insulating jacket 103, 113.

As shown in the figures, at least one of the cables 101 and 111 comprises a buffered optical fiber 114 dispersed among the electrically conductive filaments 112a of the electrical conductor 112. Preferably, when a neutral cable is used, the buffered optical fiber 114 is inserted in the neutral cable (i.e., the cable including the optical fiber is connected to the neutral pole during installation).

Preferably, the buffered optical fiber 114 is a tight buffered optical fiber, i.e. an optical fiber having a protective buffer layer which tightly surrounds the optical fiber.

Preferably, the number of electrically conductive filaments in an electrical cable conductor is at least 12 times the number of the buffered optical fibers contained within the same electrical cable. Preferably, the number of electrically conductive filaments is at least 18 times higher than the number of the buffered optical fibers. The number of electrically conductive filaments is preferably in the range between 16 and 3300, more preferably 72 and 238. The number of buffered optical fibers in the electrical cable may be in the range between 1 and 16, preferably up to 4.

The diameter of the buffered optical fiber or fibers is substantially equal to or greater than the diameter of the electrically conductive filaments. Advantageously, the diameter of the buffered optical fiber is between 1 and 5 times the diameter of the electrically conductive filaments. Most preferably, the diameter of the buffered optical fiber is at least twice the diameter of the electrically conductive filaments.

The diameter of the buffered optical fiber is preferably comprised between 0.6 mm and 1.2 mm, for example 0.9 mm. In order to obtain a flexible cable the electrical conductors have diameters corresponding to the requirements of Class 5 according to Standard IEC 60228 - 3rd Edition - 2004-11. The diameter of the electrically conductive filaments is preferably between 0.1 mm and 0.6 mm, for example 0.4 mm.

Preferably, the electrically conductive filaments and the buffered optical fibers are twisted together to form a bundle of filaments and buffered optical fibers having stranding pitch at least 10 times greater than the diameter "D" (see figure 6) of the bundle formed by said filaments and said buffered optical fibers. Preferably, said stranding pitch is between 70 mm and 130 mm.

As each buffered optical fiber is dispersed in a much higher number of electrically conductive filaments, with the relatively long stranding pitch, the buffered optical fiber can move with respect to the electrically conductive filaments during installation, so that the buffered optical fibers can find the most suitable position along the cable, sliding inside the matrix of the small filaments. In this way, the buffered optical fiber has not a fixed position in each cross section along the cable and it is always positioned in such a way to minimize the radial and axial stresses on it, even in case the cable is laid along a tortuous path. This arrangement makes it possible to obtain satisfactory data transmission property of the optical fiber, meanwhile maintaining a relatively low diameter of the power optical cable.

The termination module 10 houses an end portion of the power optical cable 100. The termination module 10 is configured to optically connect the optical fibers of the power optical cable 100 with customer optical fibers and to electrically connect the electrical conductor 102, 112 of the power optical cable 100 with a customer power cable, such as a power cable connected with an electric equipment 209 arranged in the electric cabinet 200.

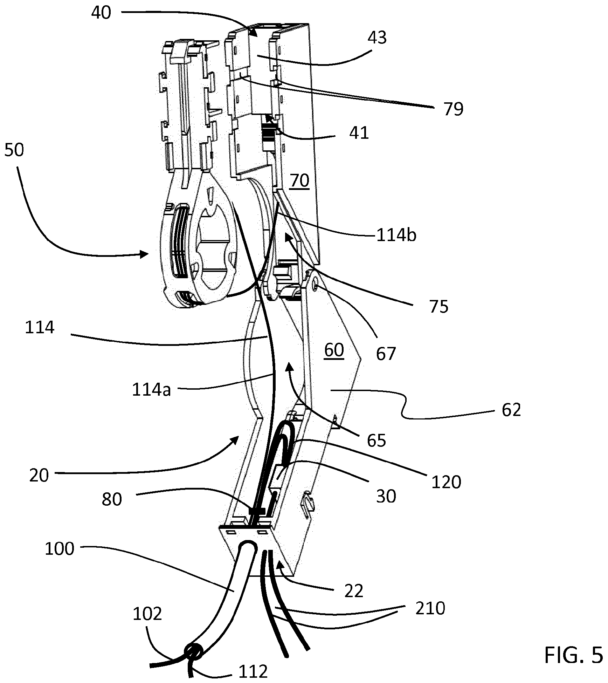

As shown in FIG. 5, the termination module 10 comprises an enclosure 20. The enclosure 20 comprises a first enclosure part 60 and a second enclosure part 70. The first enclosure part 60 is a fixed part. The second enclosure part 70 is movable part rotatably attached to the fixed part 60. The fixed part 60 houses an electric connector 30 and the second enclosure part 70 includes optical housings 40. The fixed part 60 of the enclosure 20 has an inlet opening 21 for receiving the power optical cable 100, and an electric outlet opening 22; the movable part 70 comprises optical outlet openings 23.

For the purposes of the present description and claims, the electric connector 30 it is intended any type of device for joining electrical conductors. The connection may be temporary using, for example, a mechanical assembly (electrical clamps, unipole or bipole connectors, ecc) and requiring, optionally, a tool for assembly and removal the conductors, or permanent through, for example, an electrical joint between the two conductors (for example made by welding).

The electric connector 30 is arranged proximate to the electric outlet opening 22, for electrically connecting the electrical conductors 102, 112 of the power optical cable 100 with a customer power cable, in particular for electrically connecting the electrical conductors 102, 112 of the power optical cable 100 with corresponding electrical conductors of a customer power cable 210.

Preferably, the electric connector 30 is arranged substantially in the proximity of the electric outlet opening 22.

The optical housings 40 are arranged at the optical outlet openings 23 and receive corresponding optical connectors 41, coupled to the optical fibers of the power optical cable for allowing optically connection of the optical fibers of the power optical cable with customer optical fibers of customer optical cables 5.

In the example of figure 5, one buffered optical fiber exits from the power optical cable 100 and ends with the optical connector 41. The optical connector 41 ends in the shape of a standard ferrule plug housing and the latter is preferably configured to mate with a corresponding fiber optic receptacle/adapter 43 (as, for example, the SC adapter). The adapter 43 is accommodated inside the termination module. Preferably, the optical housings 40 receive respective optical adapters 43 for the corresponding optical connectors 41. In particular, each optical housing is provided with retaining slots 79, intended to be coupled with corresponding ridges of the optical adapter 43.

With this arrangement, when a customer requires to be connected to an optical telecommunication line, is it possible to replace the power cable coming from the external power network to the user location with the power optical cable 100.

A first option comprises replacing the power cable coming from the external power network to the user location with a power optical cable 100, with free end; subsequently, the termination module 10 is connected to the power optical cable 100 on the field, as hereinafter described.

A second option comprises preparing in the factory a power optical cable 100 connected to a termination module 10 and replacing the power cable coming from the external power network to the user location with the power optical cable 100 factory connectorized.

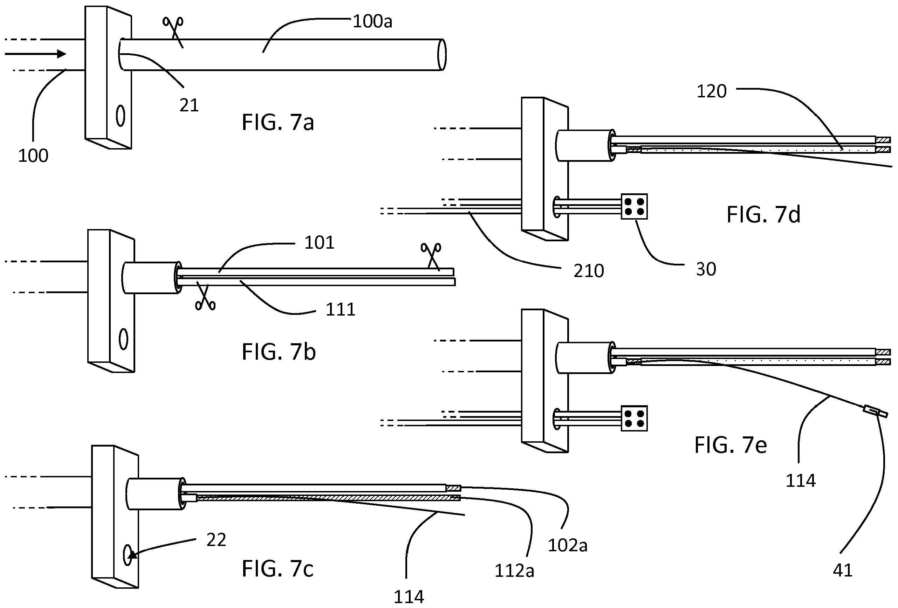

According to the first option, an operator inserts a first end of a previously installed power optical cable 100 through the inlet opening 21 (in the direction of the arrow shown in fig. 7a) so that the power optical cable 100 enters the termination module 10 for a certain length, for example 1 meter.

Then, a portion of the jacket 100a is removed from the power optical cable 100, for exposing the relevant cables 101 and 111 (phase cable and/or neutral cable) (fig.7b).

Subsequently, the operator removes part of the insulating jacket 113 of the cable 111 for exposing the filaments 112a of the conductor 112 and accessing the buffered optical fiber 114, which is routed outside of the conductor 112.

A thermo-shrinkable sealing tube 120, or a similar insulating coating, is then fitted on the conductor 112 to cover the filaments 112a up to the point where the optical fiber 114 is routed outside of the conductor 112, so as to restore the insulation, leaving exposed only a short length of the conductor 112.

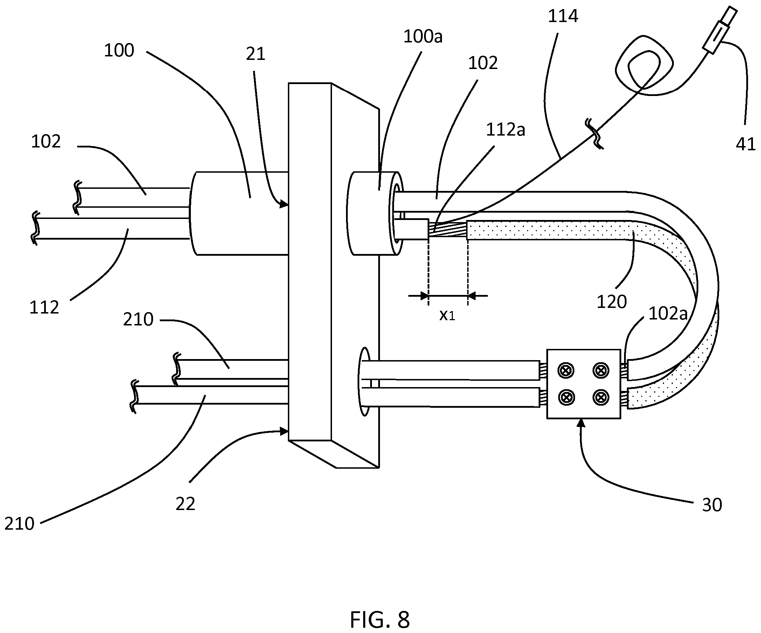

As shown in fig. 8, the conductor 112, with restored insulation, is thereafter routed to the electric connector 30, so as to enable the electric connection of the conductor 112 to a relevant socket of the connector 30.

The end portion of the insulating jacket 103 of the electrical conductor 102 is removed, for exposing a length of its filaments 102a (fig.7c), for connection to the connector 30 (fig. 8).

The customer power cables 210 are inserted into the termination module 10 through the electric outlet opening 22, so as the relevant electrical conductors are connected to the relevant sockets of the electric connector 30 (fig. 7d).

The buffered optical fiber 114 is then connected to the optical connector 41 (for example through dedicated splice connector kits), as shown in figure 7e, and the optical connector 41 is finally inserted in its seat in the optical housing 40 (fig. 8).

With this arrangement, advantageously, only a short length x₁ (for example 1 cm) of the conductor 112 is left exposed for exiting the buffered optical fiber 114 from the electrical conductor 112. This exposed portion is located in the rear portion of the termination module 10, far from any further reach of the operators accessing the module. In this manner, the optical fibers can be safely managed by the operators, minimizing the risk to touch the electric conductor 112.

When the electric and optical connections with the electric connector 30 and the optical connector 41 have been completed, the movable part 70 of the termination module 10 can be closed, by rotating around the pins 77, covering the area of the electric connector 30. Thereafter, no electrical parts outside the termination module 10 remain exposed, in such a way that any subsequent optical connection can be made allowing the operators to remain safely protected from accidental contact with electric parts.

As shown in figure 5, the power optical cable 100 enters the fixed part 60 of the termination module 10 through the inlet opening 21, the buffered optical fiber 114 runs through the fixed part 60 and the movable part 70 and terminates with the optical connector 41 arranged at the optical outlet openings 23 in the respective optical housings 40. In turn, the electrical conductors 102,112 run through the fixed part 60 of the termination module 10 and reach the electrical connector 30, where they are connected to relevant conductors of the customer power cables 210.

In alternative, according to the second option, the installation can be made by using a power optical cable 100 factory pre-connectorized to the termination module 10.

In this way, the operations of connecting the electrical conductors 102,112 of the power optical cable 100 to the electrical connector 30 and of connecting the buffered optical fiber 114 to the relevant optical connector 41 (the steps described above with reference to the figures from 7a to 8) are made in the factory, in particular eliminating the risk of mistakes or problems while to making the assembly of the optical connector on the fiber in the user premises and avoiding the need of an operator specialized in optical assemblies.

In this way, the operator in the field will install the power optical cable 100 by starting from the user cabinet 200 and, subsequently, he will mount the termination module 10 on a DIN rail or the like of the cabinet 200 and will connect the customer power cable 210 to the electric connector 30.

The optical connection of the buffered optical fiber of the power optical cable 100 to the user's optical fiber will be made without any further access to the electric portion of the termination module 10, by coupling the relevant optical connectors (for example SC connectors).

Preferably, the termination module 10 comprises a cable retaining member 80 arranged inside the enclosure 20 proximate to the inlet opening 21. This cable retaining member retains the power optical cable 100 entering the inlet opening 21 to constrain the power optical cable. More preferably, the cable retaining member 80 is also configured to retain the buffered optical fibers 114 of the power optical cable 100.

Preferably, the termination module 10 comprises a routing member 50 arranged inside the enclosure 20. This routing member 50 receives and retains an extra length of the buffered optical fiber 114 exiting the power optical cable 100.

Preferably, the inlet opening 21, the electric outlet opening 22 and the optical outlet openings 23 are formed in a bottom surface 20a of the enclosure 20 so that the power optical cable 100 enters the enclosure 20 on the same side from which the customer optical fibers and the customer power cable can be connected with the optical fibers and the electric conductors of the power optical cable 100.

The bottom surface 20a is the surface facing and substantially parallel to the floor of the building when the termination module 10 is installed in the cabinet 200.

The electric connector 30 and the optical housings 40 are arranged inside the enclosure 20. In particular, the enclosure 20 is provided with first attaching members at the electric outlet opening 22 to removably attach the electric connector 30 to the enclosure 20 and with second attaching member at the optical outlet openings 23 to removably attach the optical connectors 41 to the optical housings 40 of the enclosure 20.

According to the embodiment shown in the figures, the enclosure 20 comprises a fixed part 60 and a movable part 70.

The inlet opening 21 and the electric outlet opening 22 are formed in the fixed part 60 while the optical outlet openings 23 are formed in the movable part 70.

Preferably, the inlet opening 21 and the electric outlet opening 22 are formed in a bottom wall of the fixed part 60 while the optical outlet openings 23 are formed in a bottom wall of the movable part 70.

Preferably, the fixed part 60 comprises a bottom wall 61 with a bottom surface, two parallel lateral walls 62, a rear wall 63 and a top wall 64 delimiting a first seat 65. The inlet opening 21 and the electric outlet opening 22 are formed in the bottom wall 61 and therefore the electric connector 30 is arranged inside the fixed part 60.

The inlet opening 21 has an inlet axis A orthogonal to the plane defined by the inlet opening 21.

The fixed part 60 is configured to be attached to a mounting member, such as the mounting member 208 of the electric cabinet 200 such that, in use when the termination module is attached to a mounting member, the bottom wall 61 of the fixed part 60 faces downward. According to one embodiment, the rear wall 63 of the fixed part 60 comprises an attachment member 66 for attaching the fixed part 60 to the mounting member 201. Preferably, the attachment member 66 is configured to attach the fixed part 60 to a DIN rail. In the example, the attachment member 66 comprises a recess and an elastic hook for snap attachment of the fixed part 60 to the DIN rail.

In an embodiment according to the invention, the movable part 70 is rotatably attached to the fixed part 60 to move relative to the fixed part 60 about a rotation axis X-X between a first position and a second position.

According to the invention shown in the figures, the fixed part 60 has two openings 67 faced between them and the movable part 70 has two pins 77. Each pin 77 extends along the rotation axis X-X and is mounted in a respective opening 67 for allowing rotation of the movable part 70 relative to the fixed part 60 about the rotation axis X-X.

Preferably, the movable part 70 comprises a bottom wall 71 with a bottom surface 71a, two parallel lateral walls 72 and a front wall 73 delimiting a second seat 75. The optical outlet openings 23 are formed in the bottom wall 71 and therefore the optical housings 40 are arranged inside the movable part 70.

The bottom surface 61a of the fixed part 60 and the bottom surface 71a of the movable part 70 define the bottom surface 20a of the enclosure 20. Each optical outlet opening 23 has a respective outlet axis, each indicated with B in the figures.

Advantageously, with this arrangement, an operator may allow a customer to connect its customer optical cable (for example the cable of its modem) to the optical fibers of the power optical cable 100 in a simple and fast manner by rotating the movable part 70 relative to the fixed part 60 up to an angle sufficient for the customer to easily access the bottom surface 71a of movable part 70 of the enclosure 20. Afterwards, the customer moves the movable part 70 back to the first position in which the power optical cable 100, the customer power cable and the costumer optical cable project from the bottom surface 20a of the enclosure 20, particularly from the bottom surfaces 61a and 71a of the fixed and movable parts 60, 70, respectively thereby reducing the possibility that the cables entangle mutually.

According to a first embodiment, in the first position, the inlet axis A is parallel to each outlet axis B and in the second position each outlet axis B is inclined relative to the inlet axis A at a second angle.

According to a second embodiment, in the first position, the inlet axis A is inclined relative to each outlet axis B at a first angle and in the second position each outlet axis B is inclined relative to the inlet axis A at a second angle greater than the first angle.

Preferably, the second angle between the inlet axis A and the outlet axes B in the second position ranges between 30° and 150°. More preferably, the angle second between the inlet axis A and the outlet axes B in the second position ranges between 60° and 150°.

Preferably, in the first position, the fixed part 60 and the movable part 70 are mutually positioned such that the bottom wall 61 is adjacent to the bottom wall 71 and the lateral walls 62 are adjacent to the lateral walls 72. In the first position, the front wall 73, the rear wall 63 and the top wall 64 with the bottom walls 61, 71 and the lateral walls 62,72 delimit the first seat 65 and the second seat 75.

Preferably, in the first position, the bottom surface 61a of the fixed part 60 and the bottom surface 71a of the movable part 70 lay on a same plane or on parallel planes. In the second position, the bottom surface 61 of the fixed part 60 is inclined relative to the bottom surface 71a of the movable part 70.

According to one embodiment, the rotation axis X-X extends perpendicularly to the inlet axis A and outlet axes B. Preferably, the rotation axis X-X is parallel to the mounting member 208. Advantageously, the rotation axis X-X is arranged at an end portion 60a of the fixed part 60 and at an end portion 70a of the movable part 70. According to one embodiment, the end portion 60a of the fixed part 60 and the end portion 70a of the movable part 70 are top end portions. This allows the bottom surface 71a of the movable part 70 to move away from the bottom surface 61a of the fixed part 60 making easier for the customer to access to the optical outlet openings 23 of the movable part 70 and connect the customer fibers to the optical connectors 41 arranged in the movable part 70.

In the example of figure 5, the two openings 67 are formed in the end portion 60a of the fixed part 60, preferably in the lateral walls 62 of the fixed part 60. In the example of figure 5, the two pins 77 are formed in the end portion 70a of the movable part 70, preferably projecting from the lateral walls 72 of the movable part 70 along the rotation axis X-X in opposite directions.

According to one embodiment, locking members (not shown) are provided for locking the fixed part 60 with the movable part 70 in the first position. The locking members are configured to be actuated to unlock the movable part 70 relative to the fixed part 60 to move the movable part 70 relative to the fixed part 60 from the first position to the second position.

According to one embodiment not shown in the figures, the optical termination module 10 can comprises an optical passive module as a fiber splice, an optical splitter or the like. Generally, a splitter receives a single optical fiber at one end and two or more optical fibers at the opposite end. A splice receives a single optical fiber at one end and a single optical fiber at the opposite end. The optical passive module can be accommodated in the first seat 65 or in the second seat 75 or alternatively can be fixed to the fiber routing member 50. For example, the first portion 114a of the buffered optical fiber 114 can be connected to an optical passive module and then the latter connected to the second portions 114b.

## Claims

1. A termination module (10) for electrically connecting an electrical conductor (102, 112) of a power optical cable (100), comprising at least one electrical conductor (102, 112) and at least one buffered optical fiber (114), with a corresponding electrical conductor of a customer power cable (210), and optically connecting the buffered optical fiber (114) with a corresponding optical fiber of a customer optical cable, said termination module (10) comprising:
- a first enclosure part (60) comprising:
an inlet opening (21) for receiving said power optical cable (100),
an electrical connector (30) enabling electrically connecting the electrical conductors (102, 112) of the power optical cable (100) with corresponding electrical conductors of the customer power cable (210),
- a second enclosure part (70) comprising:
one or more optical connectors (41) optically connecting the buffered optical fibers (114) with one or more corresponding customer optical fibers of the customer optical cable,
**characterized by the fact that:**
- the first enclosure part (60) is a fixed part comprising the inlet opening (21) and an electric outlet opening (22) for receiving said customer power cable (210), and
- the second enclosure part (70) is a movable part rotatably attached to the fixed part (60) to move relative to the fixed part about a rotation axis (X-X) and comprising one or more optical outlet openings (23).

2. The termination module (10) according to claim 1, wherein the inlet opening (21), the electric outlet opening (22) and the one or more optical outlet openings (23) are formed in a bottom surface (20a) of the termination module (10).

3. The termination module (10) according to any of claims 1 to 2, comprising one or more optical housings (40) arranged at said one or more optical outlet openings (23) and configured to receive corresponding the one or more optical connectors (41) coupled to the buffered optical fibers of the power optical cable (100) and the electric connector (30) arranged proximate to said electric outlet opening (22), wherein the electric connector (30) and the one or more optical housings (40) are arranged inside the enclosure (20).

4. The termination module (10) according to any of claims 1 to 3, comprising a routing member (50) arranged inside the termination module (10) and configured to route the buffered optical fibers of the power optical cable to the corresponding one or more optical housings (40).

5. The termination module (10) according to any of claims 1 to 4, wherein:
- the inlet opening (21) and the electric outlet opening (22) are formed in a bottom wall (61) of the fixed part (60),
- the one or more optical outlet openings (23) are formed in a bottom wall (71) of the movable part (70).

6. The termination module (10) according to any of claims 3 to 5, wherein:
- the electric connector (30) is arranged inside the fixed part (60),
- the one or more optical housings (40) are arranged inside the movable part (70).

7. The termination module (10) according to any of claims 4 to 6, wherein the routing member (50) is arranged inside the movable part (70).

8. The termination module (10) according to any of claims 1 to 7, wherein said inlet opening (21) has an inlet axis (A) extending along an axial direction, said termination module (10) comprising a cable retaining member (80) arranged inside the termination module (10) proximate to the inlet opening (21) and configured to receive and retain the power optical cable (100) to constrain the power optical cable along the axial direction.

9. The termination module (10) according to claim 8, wherein the cable retaining element (80) is configured to retain the buffered optical fibers (114) of the power optical cable (100).

10. A termination assembly (1) comprising:
- a power optical cable (100) comprising one or more electrical conductors (102, 112) and one or more buffered optical fibers (114),
- a termination module (10) according to any of claims 1 to 9.

## Patentansprüche

1. Abschlussmodul (10) zum elektrischen Verbinden eines elektrischen Leiters (102, 112) eines optischen Leistungskabels (100), das mindestens einen elektrischen Leiter (102, 112) und mindestens eine gepufferte optische Faser (114) umfasst, mit einem entsprechenden elektrischen Leiter eines Kundenleistungskabels (210), und zum optischen Verbinden der gepufferten optischen Faser (114) mit einer entsprechenden optischen Faser eines optischen Kundenkabels, wobei das Abschlussmodul (10) umfasst:
- ein erstes Gehäuseteil (60) mit:
Eine Eingangsöffnung (21) zur Aufnahme des optischen Leistungskabels (100), eines elektrischen Verbinders (30), der die elektrische Verbindung der elektrischen Leiter (102, 112) des optischen Leistungskabels (100) mit entsprechenden elektrischen Leitern des Kundenleistungskabels (210) ermöglicht,
- ein zweites Gehäuseteil (70), das Folgendes umfasst:
Einen oder mehrere optische Verbinder (41), die die gepufferten optischen Fasern (114) mit einer oder mehreren entsprechenden optischen Kundenfasern des optischen Kundenkabels optisch verbinden,
**gekennzeichnet durch** die Tatsache, dass
- das erste Gehäuseteil (60) ein festes Teil ist, das die Eingangsöffnung (21) und eine elektrische Ausgangsöffnung (22) zur Aufnahme des Kundenleistungskabels (210) umfasst, und
- das zweite Gehäuseteil (70) ein bewegliches Teil ist, das drehbar an dem festen Teil (60) angebracht ist, um sich relativ zu dem festen Teil um eine Drehachse (X-X) zu bewegen, und eine oder mehrere optische Ausgangsöffnungen (23) aufweist.

2. Abschlussmodul (10) nach Anspruch 1, wobei die Einlassöffnung (21), die elektrische Auslassöffnung (22) und die eine oder mehrere optische Auslassöffnungen (23) in einer Bodenfläche (20a) des Abschlussmoduls (10) ausgebildet sind.

3. Abschlussmodul (10) nach einem der Ansprüche 1 bis 2, das ein oder mehrere optische Gehäuse (40) umfasst, die an der einen oder den mehreren optischen Auslassöffnungen (23) angeordnet und so konfiguriert sind, dass sie entsprechend den einen oder die mehreren optischen Verbinder (41), die mit den gepufferten optischen Fasern des optischen Leistungskabels (100) gekoppelt sind, und den elektrischen Verbinder (30), der in der Nähe der elektrischen Auslassöffnung (22) angeordnet ist, aufnehmen, wobei der elektrische Verbinder (30) und das eine oder die mehreren optischen Gehäuse (40) innerhalb des Gehäuses (20) angeordnet sind.

4. Abschlussmodul (10) nach einem der Ansprüche 1 bis 3, das ein Routing-Element (50) umfasst, das im Inneren des Abschlussmoduls (10) angeordnet und so konfiguriert ist, dass es die gepufferten optischen Fasern des optischen Leistungskabels zu dem entsprechenden einen oder mehreren optischen Gehäusen (40) leitet.

5. Abschlussmodul (10) nach einem der Ansprüche 1 bis 4, wobei:
- die Einlassöffnung (21) und die elektrische Auslassöffnung (22) in einer Bodenwand (61) des festen Teils (60) ausgebildet sind,
- die eine oder mehrere optische Auslassöffnungen (23) in einer Bodenwand (71) des beweglichen Teils (70) ausgebildet sind.

6. Das Abschlussmodul (10) nach einem der Ansprüche 3 bis 5, wobei:
- der elektrische Steckverbinder (30) im Inneren des festen Teils (60) angeordnet ist,
- das eine oder die mehreren optischen Gehäuse (40) im Inneren des beweglichen Teils (70) angeordnet sind.

7. Abschlussmodul (10) nach einem der Ansprüche 4 bis 6, wobei das Routing-Element (50) im Inneren des beweglichen Teils (70) angeordnet ist.

8. Abschlussmodul (10) nach einem der Ansprüche 1 bis 7, wobei die Einlassöffnung (21) eine Einlassachse (A) aufweist, die sich entlang einer axialen Richtung erstreckt, wobei das Abschlussmodul (10) ein Kabelhalteelement (80) umfasst, das im Inneren des Abschlussmoduls (10) in der Nähe der Einlassöffnung (21) angeordnet und so konfiguriert ist, dass es das optische Leistungskabel (100) aufnimmt und hält, um das optische Leistungskabel entlang der axialen Richtung einzuschränken.

9. Abschlussmodul (10) nach Anspruch 8, wobei das Kabelhalteelement (80) so konfiguriert ist, dass es die gepufferten optischen Fasern (114) des optischen Leistungskabels (100) zurückhält.

10. Eine Abschlussanordnung (1), die Folgendes umfasst:
- ein optisches Leistungskabel (100) mit einem oder mehreren elektrischen Leitern (102, 112) und einer oder mehreren gepufferten optischen Fasern (114),
- ein Abschlussmodul (10) nach einem der Ansprüche 1 bis 9.

## Revendications

1. Module de terminaison (10) destiné à raccorder électriquement un conducteur électrique (102, 112) d'un câble optique d'alimentation (100), comprenant au moins un conducteur électrique (102, 112) et au moins une fibre optique avec couche tampon (114), à un conducteur électrique correspondant d'un câble d'alimentation de client (210), et à raccorder de manière optique la fibre optique avec couche tampon (114) à une fibre optique correspondante d'un câble optique de client, ledit module de terminaison (10) comprenant :
- une première partie de boîtier (60) comprenant :
une ouverture d'entrée (21) destinée à recevoir ledit câble optique d'alimentation (100),
un raccord électrique (30) permettant de raccorder de manière électrique les conducteurs électriques (102, 112) du câble optique d'alimentation (100) aux conducteurs électriques correspondants du câble d'alimentation de client (210),
- une seconde partie de boîtier (70) comprenant :
un ou plusieurs raccords optiques (41) raccordant de manière optique les fibres optiques avec couche tampon (114) à une ou plusieurs fibres optiques de client correspondantes du câble optique de client,
**caractérisé par le fait que** :
- la première partie de boîtier (60) est une partie fixe comprenant l'ouverture d'entrée (21) et une ouverture de sortie électrique (22) destinée à recevoir ledit câble d'alimentation de client (210), et
- la seconde partie de boîtier (70) est une partie mobile fixée de manière rotative à la partie fixe (60) pour se déplacer par rapport à la partie fixe autour d'un axe de rotation (X-X) et comprenant une ou plusieurs ouvertures de sortie optique (23).

2. Module de terminaison (10) selon la revendication 1, dans lequel l'ouverture d'entrée (21), l'ouverture de sortie électrique (22) et les une ou plusieurs ouvertures de sortie optique (23) sont formées dans une surface inférieure (20a) du module de terminaison (10).

3. Module de terminaison (10) selon l'une quelconque des revendications 1 à 2, comprenant un ou plusieurs logements optiques (40) agencés au niveau desdites une ou plusieurs ouvertures de sortie optique (23) et configurés pour recevoir les un ou plusieurs raccords optiques (41) correspondants couplés aux fibres optiques avec couche tampon du câble optique d'alimentation (100) et le raccord électrique (30) agencé à proximité de ladite ouverture de sortie électrique (22), dans lequel le raccord électrique (30) et les un ou plusieurs logements optiques (40) sont agencés à l'intérieur du boîtier (20).

4. Module de terminaison (10) selon l'une quelconque des revendications 1 à 3, comprenant un organe d'acheminement (50) agencé à l'intérieur du module de terminaison (10) et configuré pour acheminer les fibres optiques avec couche tampon du câble optique d'alimentation vers les un ou plusieurs logements optiques (40) correspondants.

5. Module de terminaison (10) selon l'une quelconque des revendications 1 à 4, dans lequel :
- l'ouverture d'entrée (21) et l'ouverture de sortie électrique (22) sont formées dans une paroi inférieure (61) de la partie fixe (60),
- les une ou plusieurs ouvertures de sortie optique (23) sont formées dans une paroi inférieure (71) de la partie mobile (70).

6. Module de terminaison (10) selon l'une quelconque des revendications 3 à 5, dans lequel :
- le raccord électrique (30) est agencé à l'intérieur de la partie fixe (60),
- les un ou plusieurs logements optiques (40) sont agencés à l'intérieur de la partie mobile (70).

7. Module de terminaison (10) selon l'une quelconque des revendications 4 à 6, dans lequel l'organe d'acheminement (50) est agencé à l'intérieur de la partie mobile (70).

8. Module de terminaison (10) selon l'une quelconque des revendications 1 à 7, dans lequel ladite ouverture d'entrée (21) a un axe d'entrée (A) s'étendant le long d'une direction axiale, ledit module de terminaison (10) comprenant un organe de retenue de câble (80) agencé à l'intérieur du module de terminaison (10) à proximité de l'ouverture d'entrée (21) et configuré pour recevoir et retenir le câble optique d'alimentation (100) afin de contraindre le câble optique d'alimentation le long de la direction axiale.

9. Module de terminaison (10) selon la revendication 8, dans lequel l'organe de retenue de câble (80) est configuré pour retenir les fibres optiques avec couche tampon (114) du câble optique d'alimentation (100).

10. Ensemble de terminaison (1) comprenant :
- un câble optique d'alimentation (100) comprenant un ou plusieurs conducteurs électriques (102, 112) et une ou plusieurs fibres optiques avec couche tampon (114),
- un module de terminaison (10) selon l'une quelconque des revendications 1 à 9.
